# EUROPÄISCHE PATENTSCHRIFT

(11) **EP 0 967 100 B1**
(45) Veröffentlichungstag und Bekanntmachung des Hinweises auf die Patenterteilung: **20.12.2000**
(21) Anmeldenummer: 98109443.6
(22) Anmeldetag: 25.05.1998
(51) Int. Cl.: B60J 7/14

(54) **Versenkbares Fahrzeugdach für Personenkraftwagen**
Retractable roof for motorvehicle
Toit escamotable pour véhicule automobile

(43) Veröffentlichungstag der Anmeldung: 29.12.1999
(73) Patentinhaber: Dura Convertible Systems GmbH, 50735 Köln (DE)
(72) Erfinder: Farland, David Mac, Dipl.-Ing., 85716 Unterschleissheim (DE)
(74) Vertreter: Strobel, Wolfgang, Dipl.-Ing.

(56) Entgegenhaltungen:
- EP-A- 0 764 553
- DE-C- 4 326 329
- FR-A- 2 694 245

## Beschreibung

Die vorliegende Erfindung betrifft ein versenkbares Fahrzeugdach für Personenkraftwagen, insbesondere für Cabriolets, nach dem Oberbegriff des Anspruchs 1.

Ursprünglich, von der Kutsche kommend, wurden motorbetriebene Fahrzeuge zunächst offen gebaut und wiesen nur teilweise Dächer auf. Das offene Fahren war und ist heute mehr denn je Bestandteil der Kultur des Autofahrens. Bei Cabriolets werden hauptsächlich Faltdächer verwendet, die mit einem entsprechend faltbaren Gestänge und einer Außenhaut versenkbar bzw. wieder aufspannbar angeordnet sind. Derartige Faltdächer haben insbesondere Nachteile aufgrund eingeschränkter Wetter- bzw. Wintertauglichkeit und sind aufgrund ihres Aufbaus mit unangenehmen Windgeräuschen bei höheren Geschwindigkeiten behaftet.

Für eine erhöhte Wetter- bzw. Wintertauglichkeit wurden bereits vor vielen Jahren starre Cabrioletverdecke entwikkelt, sogenannte Hardtops, die als aufsetzbares Dach äußerst aufwendig gestaltet waren, und insbesondere auch eine aufwendige Lackierung, wie der Rest des Fahrzeugs, aufwiesen.

Aufgrund der derzeitigen Tendenzen in der Fahrzeugkultur werden Cabriolets nicht mehr nur als reine Freizeitfahrzeuge, also beispielsweise als Zweit- oder Drittfahrzeug eines Haushalts verwendet, sondern bilden das Haupt- bzw. Ganzjahresfahrzeug.

Aus dem Stand der Technik sind weiterhin Vorschläge für im Fahrzeug versenkbare Hardtops bekannt. Aus der US-A1-4,729,592 beispielsweise ist ein teilbares Hardtop bekannt, das aus einem ersten Dachabschnitt gebildet ist, der sich im wesentlichen von der A-Säule zur C-Säule des Kraftfahrzeugs erstreckt und das einen zweiten Dachabschnitt aufweist, der im wesentlichen die C-Säule bildet und den Fahrgastraum oberhalb des Heckabschnitts des Fahrzeugs umschließt. Beide Dachabschnitte können unabhängig voneinander bewegt werden, wobei insbesondere der erste Dachabschnitt in den zweiten hineinbewegbar ist.

Aus der gattungsbildenden EP-764 553 A1 ist ebenfalls ein geteiltes Hardtop bekannt, bei dem der erste Dachabschnitt in den zweiten Dachabschnitt vollständig hineinbewegt wird, wonach der zweite Dachabschnitt durch Verschwenken in das Fahrzeug versenkt wird.

Beim letztgenannten Stand der Technik ist insbesondere nachteilig, daß neben einem konstruktiv äußerst aufwendigen Bewegungs- und Versenkmechanismus aufgrund des Einziehens des vorderen Dachabschnitts unter den hinteren eine Einschränkung der Kopffreiheit erfolgt, so daß entweder das gesamte Hardtop erheblich höher und damit den Anforderungen an ein sportliches Cabriolet zuwiderlaufend ausgebildet werden muß, oder aber die Insassen das Fahrzeug verlassen müssen, wenn das Hardtop im Fahrzeug versenkt werden soll.

Der vorliegenden Erfindung liegt deshalb die Aufgabe zugrunde, ein versenkbares Dach für Personenkraftwagen, insbesondere für Cabriolets zu schaffen, das einen einfachen Aufbau aufweist, und mittels einfacher Kinematik unter Beachtung der notwendigen Kopffreiheit ein vollständiges Versenken des Dachs im Fahrzeug ermöglicht.

Diese Aufgabe wird durch die Merkmale des Anspruchs 1 gelöst.

Dadurch, daß beide Dachabschnitte um dieselbe Schwenkachse und gleichzeitig verschwenkbar angeordnet sind, und daß der erste Dachabschnitt während der Schwenkbewegung des zweiten Dachabschnitts sich in diesen hinein- bzw. aus diesem herausbewegt, wird erreicht, daß mittels eines äußerst einfachen Aufbaus unter Beibehaltung der Kopffreiheit für die Fahrzeuginsassen ein Versenken des Hardtops im Fahrzeug bzw. dessen Herausfahren ermöglicht wird.

Vorteilhafterweise, weisen der erste und der zweite Dachabschnitt jeweils eine flexible Außenhaut auf, die insbesondere den Anschein eines stabilen Faltverdecks und damit eines herkömmlichen Cabrioletverdecks bieten. Dies bietet wiederum eine besonders kostengünstige Ausgestaltung des Hardtops, da auf eine Außenlackierung verzichtet werden kann und trotzdem die Vorteile eines starren Hardtops vorhanden sind.

Weiterhin kann die Außenhaut vorteilhafterweise eine Schicht aus einem wärmedämmenden Materials aufweisen, beispielsweise eine Schicht aus GORE-TEX (eingetragene Marke), die besonders wärmedämmend ist. Die Wärmedämmung kann dabei sowohl gegen Wärmeeintritt von außen als auch Kälteeintritt von außen genutzt werden und ist somit bei jeglichen Witterungseinflüssen günstig.

Mit besonderem Vorteil sind die Außenhautschichten beider Dachabschnitte miteinander einstückig ausgebildet, womit jegliche Fugen im Dachbereich, außer an den Rändern des Hardtops, vermieden werden. Dies erhöht nicht nur den ästhetischen Anblick des Daches, sondern vermeidet auch jegliche Dichtungsprobleme im gemeinsamen Fugenbereich der beiden Dachabschnitte.

Vorteilhafterweise ist die flexible Außenhaut am ersten Dachabschnitt nur in dessen vorderem Bereich befestigt, und liegt somit lose auf dem hinteren Abschnitt auf, so daß sie sich beim Ineinanderbewegen des ersten Dachabschnitts in den zweiten von dem ersten lösen kann und die Bewegung des ersten Dachabschnitts in den zweiten bei geschlossener Außenhaut ermöglicht.

Mit Vorteil wird der Antrieb der Bewegung des einen Dachabschnitts vom Antrieb der Bewegung des anderen Dachabschnitts gesteuert, was nicht nur einen wirksamen Gesamtantrieb darstellt, sondern auch getrennte Antriebe vermeidet. Vorteilhafterweise kann die Bewegung des ersten Dachabschnitts von der Bewegung des zweiten Dachabschnitts abhängig gemacht und damit stets die sichere Funktionsweise des Verschwenkmechanismus des Hardtops gewährleistet. Alternativ kann die Bewegung des zweiten Dachabschnitts von der Bewegung des ersten Dachabschnitts abhängig sein.

Weiterhin sind beide Dachabschnitte vorteilhafterweise aus einer Kunststoffschale gebildet, die relativ einfach ausgestaltet sein kann und insbesondere keine besonderen Oberflächenvergütungen haben muß. Dieser Aufbau bedeutet weiterhin einen wesentlichen Kosteneinsparungsvorteil gegenüber herkömmlichen lackierten Hardtops.

Vorteilhafterweise weist der zweite Dachabschnitt eine Heckscheibe aus Glas auf, die somit alle Vorzüge einer herkömmlichen Heckscheibe bietet. Insbesondere kann die Heckscheibe auch mit Heizdrähten versehen sein, welche insbesondere im Winter eine Beheizung der Heckscheibe und die Entfernung eines möglichen Beschlages ermöglichen.

Weitere Einzelheiten, Merkmale und Vorteile der vorliegenden Erfindung ergeben sich aus der nachfolgenden Beschreibung unter Bezugnahme auf die Zeichnungen. Darin zeigt:
- Figur 1: eine schematische Darstellung einer Seitenansicht eines als Cabriolet ausgestalteten Personenkraftfahrzeugs mit geschlossenem Dach;
- Figur 2: eine analoge Ansicht zu Figur 1 im Beginn des Verschwenkzustands des geschlossenen Daches;
- Figur 3: eine analoge Ansicht zu Figur 2 im Anfangsstadium des Verschwenkens des Fahrzeugdaches;
- Figur 4: eine analoge Ansicht zu Figur 3 mit weiter eingeschwenktem Fahrzeugdach;
- Figur 5: eine analoge Ansicht zu Figur 4 mit nahezu eingeschwenktem und versenktem Fahrzeugdach;
- Figur 6: eine analoge Ansicht zu Figur 5 mit vollständig versenktem Fahrzeugdach und geschlossener Versenkraumabdeckung.

Im nachfolgenden wird auf die Figuren im einzelnen bezug genommen, wobei gleiche Elemente in den Figuren mit gleichen Bezugsziffern versehen sind.

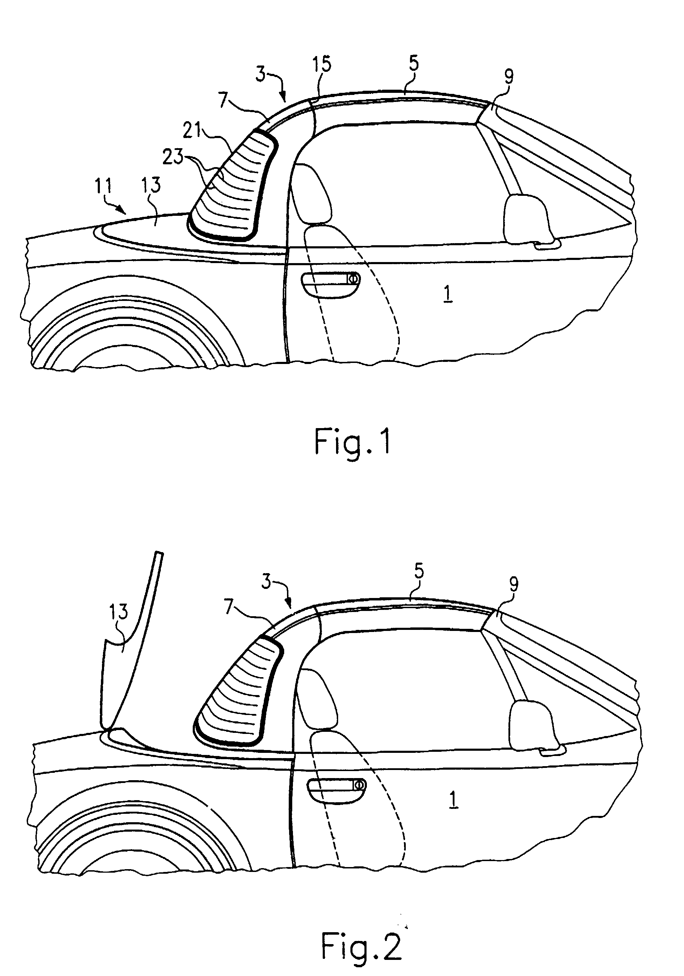

In Figur 1 ist in schematischer Seitenansicht ein Fahrzeug 1 dargestellt, das als Cabriolet ausgebildet ist. Es weist ein Fahrzeugdach 3 auf, das die Fahrgastzelle bedeckt. Das Fahrzeugdach 3 weist einen ersten Dachabschnitt 5 und einen zweiten Dachabschnitt 7 auf, die miteinander das Fahrzeugdach bilden.

Der erste Dachabschnitt 5 ist mit der A-Säule 9 des Fahrzeugs 1 verbunden und der zweite Dachabschnitt 7 ist mit dem Heckabschnitt 11 des Fahrzeugs 1 verbunden. Das Fahrzeug 1 weist weiterhin eine Abdeckung 13 auf, die den Versenkraum des Fahrzeugdachs 3 bedeckt.

Zwischen dem ersten Dachabschnitt 5 und dem zweiten Dachabschnitt 7 ist eine Trennfuge 15 vorhanden, die in der Darstellung gemäß Figur 1 schematisch ausgebildet ist und nicht sichtbar ist, da beide Dachabschnitte 5 und 7 von einer einteiligen Außenhaut bedeckt sind.

Wie weiterhin ersichtlich weist der zweite Dachabschnitt 7 eine gewöhnliche Heckscheibe 21 aus Glas auf, die mit Heizdrähten 23 versehen ist und damit als heizbare Heckscheibe ausgebildet ist.

Unter Bezugnahme auf die Figuren 2 bis 6 wird nunmehr ein Versenkvorgang des erfindungsgemäßen Fahrzeugdachs beschrieben.

Wie aus Figur 2 ersichtlich, wird in einem ersten Schritt die Abdeckung 13 nach oben verschwenkt, um den Fahrzeugdachaufnahmeraum freizugeben.

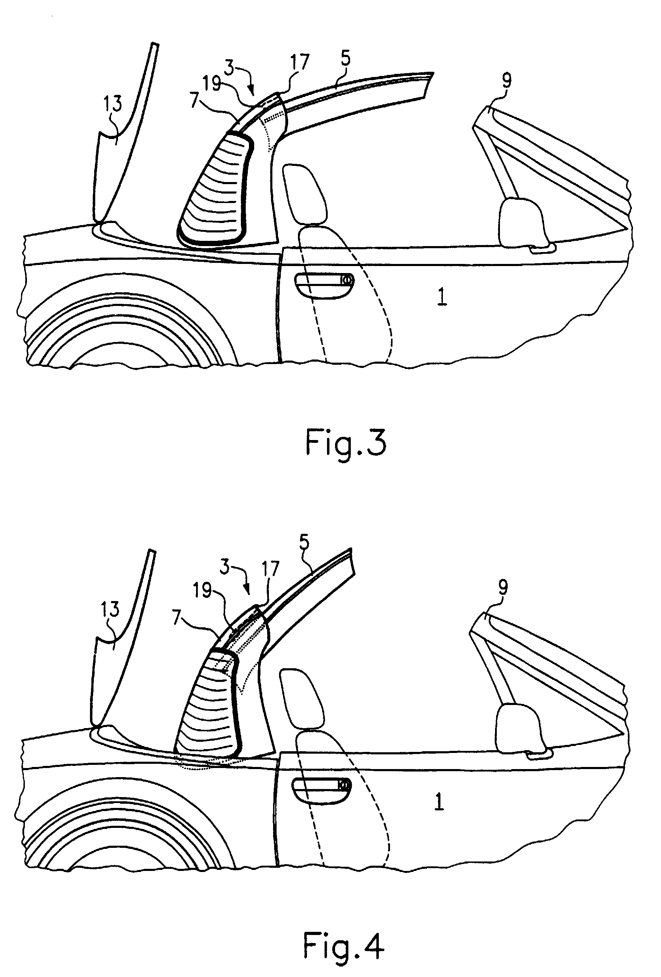

In Figur 3 ist der Verschwenkvorgang des Fahrzeugdaches 3 in einem frühen Stadium kurz nach Loslösen von der A-Säule 9 dargestellt. Dabei wird, wie ersichtlich, der zweite Dachabschnitt 7 unmittelbar nach Lösen von der A-Säule 9 verschwenkt, wodurch der erste Dachabschnitt 5 ebenfalls nach oben verschwenkt wird. Danach erfolgt eine Bewegung des ersten Dachabschnitts 5 in den zweiten Dachabschnitt 7 hinein, wobei durch Verschwenken des ersten Dachabschnitts 5 ausgangs der Verschwenkbewegung die Kopffreiheit über den Fahrzeuginsassen nicht eingeschränkt wird.

In Figur 4 ist eine weitere Verschwenkposition auf dem Weg des Versenkens des Fahrzeugdaches 3 dargestellt. Wie hieraus schematisch ersichtlich, hebt sich die einteilige Außenhaut 17 vom hinteren Bereich des ersten Abschnitts 5 ab und legt sich in eine Falte 19 zwischen den ersten und zweiten Dachabschnitt 5 und 7.

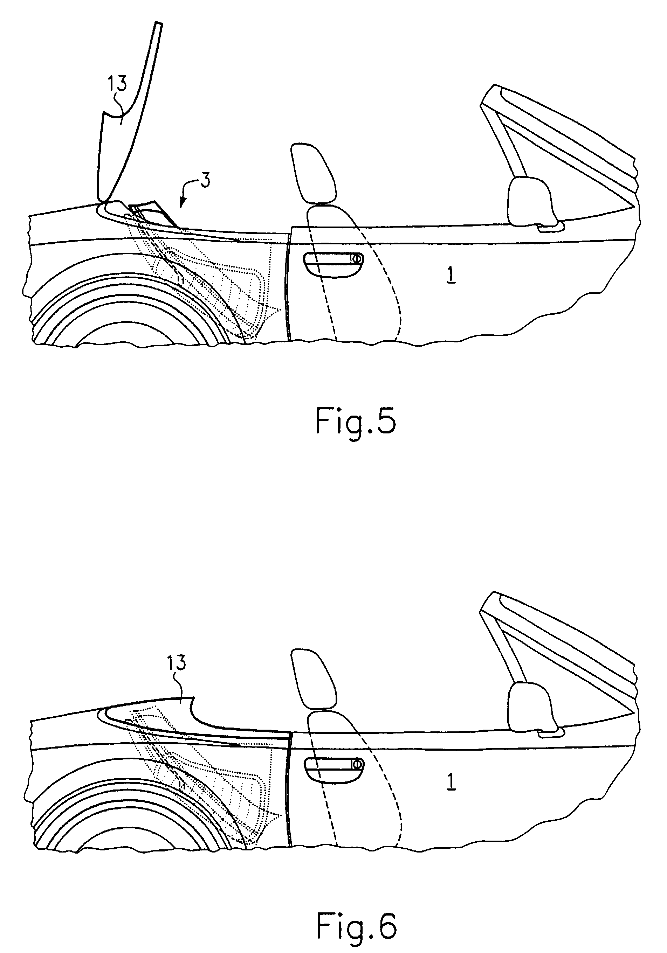

In Figur 5 ist der Einschwenkvorgang des Fahrzeugdachs 3 nahezu abgeschlossen und in Figur 6 vollständig abgeschlossen und die Abdeckung 13 ist auf den FahrzeugdachAufnahmeraum zurückgeschwenkt.

Das Zurückschwenken des Fahrzeugdachs 3 in seine Dachposition gemäß Figur 1 erfolgt in umgekehrter Reihenfolge.

Wie aus den Figuren ersichtlich, erfolgt der Schwenkvorgang des ersten und zweiten Dachabschnitts 5 und 7 um eine gemeinsame Schwenkachse, wobei die Bewegung des ersten Dachabschnitts von der Bewegung des zweiten Dachabschnitts abhängig ist.

Insgesamt wird mit der vorliegenden Erfindung somit ein einfach ausgestaltetes Hardtop eines als Cabriolet ausgebildeten Fahrzeugs geschaffen, das einen einfachen Aufbau aufweist und höchsten gestalterischen und ästhetischen Anforderungen eines Fahrzeugdachs entspricht.

## Patentansprüche

1. Versenkbares Fahrzeugdach für Personenkraftwagen, insbesondere für Cabriolets (1), das einen ersten und einen zweiten im wesentlichen starren Dachabschnitt (5, 7) aufweist, wobei der erste Dachabschnitt (5) sich im wesentlichen von der A-Säule (9) zur C-Säule des Kraftfahrzeugs erstreckt und der zweite Dachabschnitt (7) im wesentlichen die C-Säule bildet und den Fahrgastraum oberhalb des Heckabschnitts (11) des Fahrzeugs (1) umschließt, und wobei der erste Dachabschnitt (5) in den zweiten Dachabschnitt (7) bewegbar ist, dadurch gekennzeichnet, daß beide Dachabschnitte (5, 7) um dieselbe Schwenkachse und gleichzeitig verschwenkbar angeordnet sind, und daß der erste Dachabschnitt (5) während der Schwenkbewegung des zweiten Dachabschnitts (7) sich in diesen hinein- bzw. aus diesem hinausbewegt.

2. Fahrzeugdach nach Anspruch 1, dadurch gekennzeichnet, daß der erste und der zweite Dachabschnitt (5, 7) eine flexible Außenhaut (17) aufweisen.

3. Fahrzeugdach nach Anspruch 2, dadurch gekennzeichnet, daß die Außenhaut (17) beider Dachabschnitte (5, 7) eine Schicht eines wärmedämmenden Materials aufweist.

4. Fahrzeugdach nach Anspruch 2 oder 3, dadurch gekennzeichnet, daß die flexible Außenhaut (17) beider Dachabschnitte (5, 7) einstückig ausgebildet ist.

5. Fahrzeugdach nach Anspruch 4, dadurch gekennzeichnet, daß die flexible Außenhaut (17) am ersten Dachabschnitt (5) nur in dessen vorderem Bereich befestigt ist.

6. Fahrzeugdach nach einem der Ansprüche 1 bis 5, dadurch gekennzeichnet, daß der Antrieb der Bewegung des einen Dachabschnitts vom Antrieb der Bewegung des anderen Dachabschnitts gesteuert wird.

7. Fahrzeugdach nach einem der Ansprüche 1 bis 6, dadurch gekennzeichnet, daß beide Dachabschnitte (5, 7) aus einer Kunststoffschale gebildet sind.

8. Fahrzeugdach nach einem der Ansprüche 1 bis 7, dadurch gekennzeichnet, daß der zweite Dachabschnitt (7) eine Heckscheibe (21) aufweist, die vorzugsweise aus Glas gebildet ist.

9. Fahrzeugdach nach Anspruch 8, dadurch gekennzeichnet, daß die Heckscheibe (21) mit Heizdrähten (23) versehen ist.

## Claims

1. A retractable vehicle roof for passenger vehicles, particularly for convertibles (1), which has a first and a second essentially rigid roof section (5, 7), whereby the first roof section (5) essentially extends from the "A" column (9) to the "C" column of the motor vehicle, and the second roof section (7) essentially forms the "C" column and encloses the passenger space above the rear section (11) of the vehicle (1), and whereby the first roof section (5) can be moved into the second roof section (7),
characterized in
that both roof sections (5, 7) are positioned in such a manner as to be swiveled around a same swiveling axis at the same time, and that the first roof section (5), during the swiveling movement of the second roof section (7), moves into or out of the same.

2. The vehicle roof in accordance with claim 1, characterized in that the first and the second roof section (5, 7) have a flexible external skin (17).

3. The vehicle roof in accordance with claim 2, characterized in that the external skin (17) of both roof sections (5, 7) has a layer of a heat-insulating material.

4. The vehicle roof in accordance with claim 2 or 3, characterized in that the flexible external skin (17) of both roof sections (5, 7) is constructed as a single part.

5. The vehicle roof in accordance with claim 4, characterized in that the flexible external skin (17) is only attached to the first roof section (5) in the forward area of the same.

6. The vehicle roof in accordance with one of claims 1 to 5, characterized in that the drive unit for the movement of the one roof section is controlled by the drive unit for the movement of the other roof section.

7. The vehicle roof in accordance with one of claims 1 to 6, characterized in that both roof sections (5, 7) are formed from a plastic shell.

8. The vehicle roof in accordance with one of claims 1 to 7, characterized in that the second roof section (7) has a rear window (21) which is preferably formed from glass.

9. The vehicle roof in accordance with claim 8, characterized in that the rear window (21) is provided with heating wires (23).

## Revendications

1. Toit de véhicule escamotable pour véhicule automobile de tourisme, notamment pour cabriolet (1), qui comprend une première et une seconde sections de toit (5, 7) essentiellement rigides, la première section de toit (5) s'étendant essentiellement du montant-A (9) au montant-C du véhicule et la seconde section de toit (7) constituant essentiellement le montant-C et enveloppant le compartiment occupants au-dessus de la partie arrière (11) du véhicule (1), tandis que la première section de toit (5) est déplaçable dans le seconde section de toit (7), caractérisé en ce que les deux sections de toit (5, 7) sont disposées de façon qu'il soit possible de les faire basculer autour du même axe de basculement et simultanément et en ce que, pendant le mouvement de basculement de la seconde section de toit (7), la première section de toit (5) se déplace respectivement en rentrant dans celle-ci ou en sortant de celle-ci.

2. Toit de véhicule suivant la revendication 1, caractérisé en ce que les première et seconde sections de toit (5, 7) comportent une peau extérieure (17) flexible.

3. Toit de véhicule suivant la revendication 2, caractérisé en ce que la peau extérieure (17) des deux sections de toit (5, 7) comprend une couche d'une matière d'isolation thermique.

4. Toit de véhicule suivant la revendication 2 ou 3, caractérisé en ce que la peau extérieure (17) flexible des deux sections de toit (5, 7) est réalisée d'un seul tenant.

5. Toit de véhicule suivant la revendication 4, caractérisé en ce que la peau extérieure (17) flexible située sur la première section de toit (5) n'est fixée que dans la partie avant de celle-ci.

6. Toit de véhicule suivant l'une des revendications 1 à 5, caractérisé en ce que l'entraînement du mouvement de l'une des sections de toit est commandé par l'entraînement du mouvement de l'autre section de toit.

7. Toit de véhicule suivant l'une des revendications 1 à 6, caractérisé en ce que les deux sections de toit (5, 7) sont formées d'une coque en matière plastique.

8. Toit de véhicule suivant l'une des revendications 1 à 7, caractérisé en ce que la seconde section de toit (7) comporte une lunette arrière (21) qui est de préférence réalisée en verre.

9. Toit de véhicule suivant la revendication 8, caractérisé en ce que la lunette arrière (21) est pourvue de fils chauffants (23).
